Europäisches Patentamt

European Patent Office

Office européen des brevets

(11) Publication number: **0 546 635 B1**

# EUROPEAN PATENT SPECIFICATION

(45) Date of publication of patent specification: **19.07.95**  (51) Int. Cl.⁶: **C09D 153/02**, C09D 201/00

(21) Application number: **92203828.6**

(22) Date of filing: **08.12.92**

(54) **Underbody car coating compositions.**

(30) Priority: **10.12.91 EP 91203244**

(43) Date of publication of application:
**16.06.93 Bulletin 93/24**

(45) Publication of the grant of the patent:
**19.07.95 Bulletin 95/29**

(84) Designated Contracting States:
**DE ES FR GB IT NL SE**

(56) References cited:
**EP-A- 0 016 265**
**EP-A- 0 238 135**
**FR-A- 2 292 024**
**US-A- 4 801 346**

(73) Proprietor: **SHELL INTERNATIONALE RE-SEARCH MAATSCHAPPIJ B.V.**
**Carel van Bylandtlaan 30**
**NL-2596 HR Den Haag (NL)**

(72) Inventor: **De Keyzer, Noel Raymond Maurice,**
**c/o Shell Res.**
**S.A. Chem. Research Centre,**
**Avenue Jean Monnet 1**
**B-1348 Ottignies Louvain-la-Neuve (BE)**
Inventor: **Vervoort, Freddy Maria Armand, c/o**
**Shell Res.**
**S.A. Chem. Research Centre,**
**Avenue Jean Monnet 1**
**B-1348 Ottignies Louvain-la-Neuve (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

This invention relates to underbody car coating compositions and more in particular hot melt underbody car coating compositions.

Polyvinylchloride (PVC) plastisol-based hot melt underbody car coating compositions have been widely used in the last decade as a chipping resistant and anti-rust protective coating and sealant for automobile undercarriages.

However, in spite of the attractive characteristics of such automobile underbody car coatings which are known from e.g. US patent No. 4,966,936, the required recycling of automobile parts as much as possible due to increasing environmental pressure is not possible, as the PVC and auxiliaries included in said compositions, will cause the formation of hydrochloric acid and other toxic and/or environmental charging compounds, e.g. dioxines, when said compositions are burnt when recycling automobile parts.

Moreover, at present some other thermoplastic materials were already incorporated in cars, like polypropylene (PP) and the like, with the difficulty that said polymers did not withstand the high temperatures needed to gelify or to paint the PVC.

Therefore, e.g. PP-based materials had to be introduced in the car manufacturing line somewhere after the PVC gelification.

An object of the present invention is providing an underbody car coating composition which meets simultaneously the following requirements:

- chipping resistance of a high present standard;
- corrosion resistance of a high present standard;
- sound-proofing function, which should be improved as compared to the presently used PVC-baryte compositions;
- fully recyclable, i.e. without the risk of formation of toxic or otherwise dangerous compounds;
- applicable at low temperatures, i.e. lower than 160 °C;
- applicable as a melt to get rid of organic solvents, the use of which is required to be avoided due to their environmental charge;
- a cost price which is lower than the costs per car of the presently applied PVC-plastisol undercoating compositions;
- sufficient heat resistance of the undercoating layer after application; and
- sealant properties at car body joints.

The underbody car coating composition must attach well to the commonly used primer coatings. These primer coatings are usually attached to the metal substrate by electrodeposition techniques, such as cataphoresis or galvanization. Preferably said primer coatings are based on epoxy resins for obtaining an optimum attachment of the underbody car coating onto the primer coating.

As a result of extensive research and experimentation a composition was surprisingly found which appeared to meet the hereinbefore mentioned requirements.

Accordingly the invention is relating to underbody car coating compositions, comprising at least:

(a) 100 parts by weight of linear or star-shaped block copolymer, containing at least one block (A) derived from predominantly a monoalkenyl aromatic compound, having an apparent molecular weight in the range of from 5.000 to 125.000 and preferably from 6.000 to 60.000, and at least one block B optionally hydrogenated and derived from predominantly conjugated diene, the latter having an apparent molecular weight in the range of from 10.000 to 300.000 and preferably from 20.000 to 150.000 and containing vinyl groups in an amount of from 5 to 50 mole% relative to the conjugated diene molecules, and the complete block copolymer containing bound monoalkenyl aromatic in an amount of from 30 to 70% by weight and preferably from 35 to 60% by weight, the apparent molecular weight of the total block copolymer in the range of from 25.000 to 350.000 and preferably of from 35.000 to 300.000;

(b) 100-200 parts by weight of the predominantly poly(monoalkenyl aromatic) block modifying resin;

(c) 0-100 parts by weight of the predominantly poly(conjugated diene) block modifying resin;

(d) 0-50 parts by weight of a plasticizer;

(e) 0-200 parts by weight of a filler; and

(f) 0-5 parts by weight of a stabilizer and/or fire retarder.

With the terms "predominantly a monoalkenyl aromatic" and "predominantly conjugated diene" as used throughout the present specification, are meant that the starting monoalkylene aromatic monomer or monomers may be optionally mixed with minor amounts (<20% by weight) of a conjugated diene comonomer, and preferably that or those to be incorporated in the poly(conjugated diene) block(s) and that the starting conjugated diene monomer or monomers may be optionally mixed with minor amounts (<20% by weight) of a monoalkenyl aromatic comonomer, and preferably that or those to be incorporated in the poly(monoalkenyl aromatic) block(s).

With the term "apparent molecular weight" as used throughout the specification is meant the molecular weight as determined by gel permeation chromatography using polystyrene standards by construing a calibration curve.

The poly(alkenyl aromatic) block(s) can be derived from styrene, $\alpha$-methylstyrene, o-methylstyrene, p-methylstyrene, or mixtures thereof, of which styrene is the preferred monomer.

The poly(conjugated diene) block(s) can be derived from 1,3-butadiene, 2-ethyl-1,3-butadiene (isoprene), 2,3-dimethyl-1,3-butadiene, 1,3-pentadiene and 1,3-hexadiene or mixtures thereof, of which 1,3-butadiene or isoprene, or mixtures thereof, are the preferred monomers.

Block copolymers which are preferably applied as component (a), contain blocks derived from one substantially pure monoalkenyl aromatic monomer and from one substantially pure conjugated diene.

It will be appreciated that the linear triblock copolymers to be used as component (a) may be obtained by sequential polymerization or by coupling of living initial diblock copolymers.

More preferably hydrogenated or unhydrogenated star-shaped block copolymers containing at least three AB arms, such as KRATON D1122, or non-hydrogenated linear triblock copolymers, such as CARIFLEX TR-KX 139 are used, said block copolymers being optionally mixed with selectively hydrogenated diblock copolymers, such as KRATON G 1701, and/or minor amounts, i.e. up to 10% by weight of the total weight of block copolymers, of hydrogenated modified block copolymers, the hydrogenated poly-(conjugated diene) blocks of which have been grafted with e.g. maleic acid or vinyl triethoxy silane (e.g. KRATON FK-1901X) (KRATON and CARIFLEX are trade marks).

The block copolymers to be used as component (a) can be prepared by methods known in the art, such as disclosed in US patents Nos. 3,265,765; 3,231,635; 4,033,888; 4,077,893; 3,030,346; 3,251,905; 3,281,383 and 3,639,521.

It will be appreciated that the specific molecular weights of the respective constituting blocks in the complete block copolymer to be used as component (a) will depend on the specific structure of said complete block copolymer.

More in particular, the blocks (B) included in the complete block copolymers, were found to have to show a relatively higher molecular weight in linear block copolymers and preferably triblock copolymers A-B-A than those of the blocks (B) in star-shaped block copolymers obtained by coupling of living intermediate diblock copolymers AB-Me with a polyfunctional coupling agent (Me = alkali metal and preferably lithium).

Examples of poly(monoalkenyl aromatic) block modifying resins to be used as component (b) of the present composition include coumarone-indene resin, polyphenylene ethers and more particularly poly(2,6-dimethyl-1,4-phenylether), polystyrene resin, vinyltoluene-alphamethylstyrene copolymer resin or a polyindene resin, alphamethylstyrene copolymer, or poly(methyl indene) resin. Examples of such commercial resins are Hercures HM-100, Endex 160, Kristalex 120, Kristalex 5140, Nevchem NL 140 and Piccotex 120, (Hercures, Endex, Kristalex, Nevchem and Piccotex are trademarks).

Preferably amounts of 120-180 parts by weight per 100 parts by weight block copolymer are applied. Preferred modifying resins are optionally substituted polystyrene resins and/or polyphenylene ethers. More preferably substituted polystyrene and/or poly(2,6-dimethyl-1,4-phenylene ether) is used.

Modifying resins which are compatible with the poly(conjugated diene) blocks of the linear or radial teleblock copolymers useful in the present invention include normally solid modified and unmodified rosin and rosin esters of polyhydric alcohols, normally solid esters of polymerized rosin, polyterpene resins and resinous polyolefins derived from aliphatic and/or cycloaliphatic olefins or high melting polyolefins or mixtures thereof and in particular mixtures of $C_5$ and $C_9$ polyolefin resins. These polymers are non-aromatic.

Particular examples of such poly(conjugated diene)block compatible resins are polyterpene resins, e.g. Piccolyte A140 (Piccolyte is a trademark), hydrogenated rosin esters e.g. Stabilite ester 10 and Foral 105 (Stabilite and Foral are trademarks), and optionally modified hydrocarbon resins e.g. Piccotac 95, Wing Tack 95, Regalite S140 and Escorez 5480 (Piccotac, Wing Tack, Regalite and Escorez are trademarks).

If used at all, such poly(conjugated diene) block compatible resins are used in amounts in the range of from 30-80 parts by weight per 100 parts by weight of block copolymers.

Materials which are generally known as plasticizers in the rubber, adhesive and sealant art can be used as plasticizer in the present compositions. More in particular said plasticizers used include low molecular weight polyolefins, such as polybutenes or polyisobutenes; oils including naphthenic, paraffinic oils or mixtures thereof.

More preferably polyolefins are applied, having a molecular weight in the range of from 500-6000, e.g. Napvis and Hyvis (Napvis and Hyvis are trade marks).

3

As component (e) inorganic and organic fillers can be used, which are well known in the art. Examples of such fillers include calcium carbonate, aluminium silicate, clay, talc, bentonites, kaolin, barytes, barium sulfate, mica, silica and mixtures thereof, of which barium sulfate was found to be most preferred with reference to sound proofing of the underbody car coating.

It was found that fillers must have an average particle size of 50 $\mu$ or lower.

Another group of examples of fillers are the polymer fibres (polyethylene, polypropylene, aramide) or glass fibres which are incorporated in the underbody car coating compositions to be applied by spraying or extrusion coating and only in small amounts, if any. Preferred amounts of inorganic fillers are in the range of from 80-150 parts by weight per 100 parts by weight of block copolymer and organic fibres in an amount of from 0 to 5 parts by weight per 100 parts block copolymer.

It might be desirable to include pigments, stabilizers and fire retarders in the compositions of the present invention for special purposes, but the amounts of them were found to be significantly reduced as compared to those of prior art compositions. Such stabilizers include the well-known antioxidants, antiozonants and/or ultraviolet stabilizers, which cannot provide environment charging or even toxic compounds under recycling conditions. More specific examples are hindered phenols, substituted phosphites, phenolic phosphites and the like, or mixtures thereof.

Preferred stabilizers to be used in compositions of the present invention are Irganox 1010 (phenolic antioxidant), (Irganox is a trade mark). As most preferred fire retarders can be used, if any, magnesium hydroxide, aluminium hydroxides or mixtures thereof.

According to another aspect of the present invention, the compositions of the present invention can be applied by spraying or extrusion coating, but spraying of the molten composition is preferred.

The compositions of the present invention are usually applied in layers having a thickness of from 100 to 1000 $\mu$ and preferably a thickness of from 350 to 600 $\mu$ on a blank metal or greasy metal surface and preferably on a pretreated metal surface which is usually applied in automotive manufacturing e.g. metal surfaces pretreated with mineral acid such as phosphorous acid or metal surfaces coated with a primer layer by cataphoresis.

It will be appreciated that the hereinbefore indicated range of layer thickness represents an advantage as compared to those of the presently generally applied PVC plastisol underbody car coating compositions.

The compositions of the present application have appeared to form coating layers, showing an excellent heat resistance and chipping resistance, e.g. measured according to the method as in principle has been disclosed in US patent No. 4,883,834.

The compositions of the present invention can be prepared by methods known in the art for such compositions.

More in particular the compositions may be prepared batchwise in a batch mixer, such as a sigmablade kneader, or in a continuous mixer, such as an extruder, to which the block copolymer and stabilizers and/or fire retarders are introduced first, followed by the endblock compatible resin and midblock compatible resin and finally plasticizer and/or filler and/or fire retarder are introduced.

A preferred batchwise process is the hot melt-process using a sigmablade kneader. In such process a certain amount of poly(monoalkenyl aromatic)block modifying resin - usually about 1/3 of the total amount of resin to be added - and antioxidant are placed in the preheated sigmablade kneader and are kneaded until the resin has been completely melted. The temperature to be applied depends on the composition to be prepared, but usually lies within the range of from 100 to 200 °C. This temperature should at least be high enough to melt the poly(monoalkenyl aromatic)block modifying resin. Subsequently, the rubbery block copolymer and the filler are added, preferably in several smaller portions for optimum homogenization, and the mixture is kneaded until a homogeneous mixture is obtained. Then, the remaining amount of resin and optionally a plasticizer are added gradually to avoid overlubricating.

The entire process lasts between 30 and 60 minutes and is carried out under a nitrogen blanket to avoid degradation of the block copolymer and/or to restrict the degradation of the respective other ingredients during the process.

In a preferred continuous mixing process an extruder is used as the mixing apparatus. Industrial extruders having twin co-rotating screws are generally used for hot-melt compounding.

In said preferred continuous process the dry raw materials are fed to the extruder by gravimetric and/or volumetric feeders. Similar to the batchwise process, a certain feeding sequence has to be followed in order to obtain optimum product quality. In this case rubber and stabilizers (e.g. antioxidant) are introduced into the begin section of the extruder, whereas the resin(s) are introduced subsequently in the mid section of said extruder. Thus, the resulting mixture is kneaded until homogenization, after which the plasticizer and optionally a filler are introduced into the end section of the extruder.

The product uniformity is controlled by the feeding equipment and sequence, or, in more general terms, by the feeding system. Homogeneity of the final compositions primarily depends on machine variables, such as temperature settings, the number of rotations of the screw(s) per unit of time, the screw configuration, the back-pressure and the volume inside the extruder, as well as the residence time in the extruder.

It is true that in several prior publications rust proofing and motor car under sealing were mentioned as potential applications of block copolymer containing compositions, e.g. Japanese patent No. 49-17007, Japanese patent applications Nos. 57-139143 and 63-43968, European patent application No. 0238135 and US patent No. 4,883,834.

However, from the teachings in these publications including that one of EP-A-0 016 265 a person skilled in the art could certainly not be led to the present specific compositions.

Japanese patent application No. 49-17007 disclosed an easily manufacturable and processable bituminous composition by dissolving pellets of specifically structured block copolymer SBSB, contrary to the formerly used SBS block copolymers, at a temperature in the range of from 150 to 160 °C.

Japanese patent application No. 57-139143 disclosed bitumen block copolymer compositions, containing at least a stabilizer which had at least one nitrogen atom and one sulphur atom in the molecule or a mixture of such a stabilizer and a radical polymerization inhibitor, in an amount of up to 30 parts by weight per 100 parts by weight of block copolymer. The stabilizer was preferably phenothiazine or a derivative thereof.

It will be appreciated that such stabilizers could certainly cause the formation of environment charging or even toxic products under recycling conditions.

European patent application No. 0238135 disclosed a hot melt sealant composition comprising selectively hydrogenated block copolymers mixtures, a hydrogenated poly(conjugated diene) midblock compatible component present in an amount sufficient to maintain the resultant composition in a pliable condition at room temperature and to maintain the glass transition temperature of the resultant below 10 °C and an endblock compatible resin selected from coumarone-indene resin, a polystyrene resin, a vinyltoluene-alphamethyl styrene copolymer or a polyindene resin.

The hot melt sealant formulations can also include fillers, pigments, UV stabilizers, antioxidants, adhesion promoters and thixotropic agents.

A clear preference was expressed for compositions, wherein the block copolymers contain 10% to 40% by weight of monoalkenyl arene.

Moreover, no reference at all is made to underbody car coating, anti-corrosion or rust prevention.

Japanese patent application No. 63-43968 disclosed hot-melt compositions for anti-corrosion use, curable by ultraviolet irradiation and in particular suited to the prevention of rusting of cut ends of steel plate.

The composition comprised (a) a styrene containing block copolymer resin; (b) a tackifying resin; (c) a metal sulphonate; (d) a radical reactivity oligomer; and (e) an irradiation polymerization initiator.

It will be appreciated that for said compositions an additional separate cross-linking operation step was necessary, whereas moreover additional relatively expensive chemicals had to be included.

From US patent No. 4,883,834 a primer composition was known usual for steel plate and plastic sheet in vehicle bodies, consisting essentially of a resin obtained by graft polymerizing a styrene-butadiene-styrene block copolymer or its hydrogenated polymer with $\alpha,\beta$-unsaturated carboxylic acid or its anhydride (component A), a cross-linking agent selected from the group consisting of self-reactive compounds and polyisocyanate compounds together with a resin having an active hydrogen-containing functional group (component B) and an epoxy compound (component C) and having a weight ratio as solid content of component A to component B within a range of 99/1-60/40 and a weight ratio as solid content of components A + B to component C within a range of 100/1-10/50, wherein said $\alpha,\beta$-unsaturated carboxylic acid or its anhydride is contained in said component A in an amount of 0.05-10% by weight.

It will be appreciated that for said compositions an additional separate cross-linking operation step was necessary, whereas moreover expensive carboxylic acid grafted block copolymers and expensive additional chemicals had to be used.

Moreover, from e.g. US patent No. 4,781,988 was known a corrosion-resistant coating for a ferrous surface comprising an asphaltic matrix of an asphalt or a petroleum resin or a mixture thereof having a convertant dispersed therein in an amount of from 1% to 15% by weight and selected from morpholine and spherically symmetric alkyl esters of phosphorus, silicon or boron, whereas the balance was a matrix adherent to the ferrous surface and compatible with the convertant, and the convertant as determined by ESCA analysis remained on the ferrous surface after mechanical and solvent removal of the coating.

In particular the convertant is trimethylphosphite and the matrix included propane washed asphalt or a petroleum resin or a mixture thereof and included further a methacrylate copolymer.

It will be appreciated that the teachings from the discussed prior art publications were clearly leading a person skilled in the art to compositions containing more complicated and/or more expensive ingredients (modification of block copolymers or use of additional cross-linking ingredients) or to compositions which did not contain block copolymer at all and the ingredients of which could form environment charging or toxic products under recycling conditions.

Moreover for example from page 1, lines 16-25 and page 2, lines 1-9 of the PCT application WO 91/02039 a person skilled in the art could clearly learn that attractive properties for some specific applications of hot melt compositions comprising block copolymers of e.g. polystyrene and poly(conjugated diene) may not be expected at all for other specific applications.

Therefore, the properties of hot melt underbody car coating compositions, comprising monoalkenyl aromatic-conjugated diene block copolymer could certainly not be expected based on properties of block copolymer containing adhesive compositions.

The invention is illustrated by the following examples however without restricting the scope of the invention to these embodiments.

Example 1

In a sigmablade kneader 50 parts by weight of a poly(monoalkenyl aromatic)block modifying resin (Hercures HM 100) and 3 parts by weight of an antioxidant (Irganox 1010) were preheated and kneaded until the resin had been completely melted. Subsequently, 100 parts by weight of a rubbery block copolymer (Cariflex TR-KX 139) and 50 parts of calcium carbonate filler were added and the mixture was kneaded until complete homogenization. While kneading was maintained, another 100 parts by weight of Hercures HM 100 were added by means of several smaller portions. Finally, 35 parts by weight of plasticizer (Napvis-7) was added gradually.

Kneading lasted for about 45 minutes altogether and was carried out under a nitrogen blanket.

Examples 2-5

In the same way as described in Example 1 the compositions of Examples 2 to 5 were prepared, with the exception that in Examples 2 and 5 no filler was used.

The compositions of Examples 1-5 are listed in table I. The amounts are listed in parts by weight.

TABLE I

| Compositions | | | | | |
|---|---|---|---|---|---|
| Example | 1 | 2 | 3 | 4 | 5 |
| CARIFLEX TR-KX 139 | 100 | 100 | 100 | 100 | 100 |
| Hercures HM-100 | 150 | 150 | | | 150 |
| Nevchem NL-140 | | | 150 | 150 | |
| Shellflex 4510 | | | | | 25 |
| Napvis-7 | 35 | 25 | 35 | | |
| Napvis-10 | | | | 35 | |
| Durcal 5 (CaCO$_3$) | 50 | | 100 | 100 | |
| Irganox 1010 | 3 | 3 | 3 | 3 | 3 |

The compositions as listed in table I were submitted to a chipping resistance test and a temperature stability test. The chipping resistance was determined by using the chipping resistance test as in principle disclosed in ASTM method D3170-87 in a slightly modified form. In the presently used test, a testplate, provided with a primer coating onto which a layer of the underbody car coating composition had been sprayed, said layer having a thickness of 500 $\mu$m or 1000 $\mu$m, was placed in the testing machine and hard cast steel particles were blown under an angle of 30° against the testplate in an amount of 2.6 kg/min ± 0.05 kg/min.

The test was carried out at room temperature with unaged testplates and with testplates which had been aged for 11 days at 70 °C with 100% humidity.

The chipping resistance is expressed by two parameters: Time and Rating. The parameter Time represents the time, after which the hard cast steel particles have perforated the coating layer, and is expressed in seconds. Acceptable values are:

- for the unaged testplates: Time $\geq$ 300 (s);
- for the aged testplates : Time $\geq$ 210 (s).

The parameter Rating indicates the surface which has been damaged after the blowing with hardcast steel particles for 60 seconds. The Rating is expressed by means of an integer. The relation between this integer and the damaged surface (S, in $cm^2$) is as follows:

| Rating | 0 | 1 | 2 | 3 | 4 |
|---|---|---|---|---|---|
| S | <1 | 1-2 | 2-3 | 3-4 | >4 |

Acceptable values are:

- for the unaged testplates: Rating $\leq$ 1;
- for the aged testplates : Rating $\leq$ 2.

Temperature resistance was determined by submitting the testplates to a temperature of 130 °C for 60 minutes.

The testplate is placed in a vertical position at an angle of 45° in an oven and the degree of sagging down along the testplate of the coating is a measure of the temperature stability: the more the coating sags down, the worse the temperature resistance. Hence, temperature resistance is expressed by -, ± or +, indicating respectively a poor, moderate or good temperature resistance.

Beside chipping resistance and temperature resistance, viscosity and droppoint of the coating compositions were determined.

The results are listed in table II.

From table II it can be derived that the composition of Example 4 shows the best combination of properties: temperature resistance, chipping resistance, viscosity and droppoint are all excellent.

TABLE II - Properties of the underbody car coating compositions

| Example | | | 1 | | 2 | | 3 | 4 | 5 | |
|---|---|---|---|---|---|---|---|---|---|---|
| Thickness ($\mu$m) | | | 500 | 1000 | 500 | 1000 | 1000 | 1000 | 500 | 1000 |
| | Unaged: | Time (s) | >900 | >900 | 695 | >900 | 400 | 320 | 721 | >900 |
| Chipping | | Rating | 0 | 0 | 0 | 0 | 0 | 0 | 0 | 0 |
| resistance | Aged : | Time (s) | 580 | 372 | 350 | >900 | 250 | 320 | 74 | >900 |
| | | Rating | 0 | 0 | 0 | 0 | 1 | 1 | 2 | 0 |
| Temperature resistance, 130 °C | | | $\pm$ | | $\pm$ | | $\pm$ | + | $\pm$ | |
| Viscosity (Pas) at 150 °C | | | 52.8 | | 145 | | 322 | 808 | 53.6 | |
| | 160 °C | | 32.0 | | 82.0 | | 158 | 342 | 34.6 | |
| | 170 °C | | 20.8 | | 53.2 | | 88 | 165 | 20.1 | |
| | 180 °C | | 17.0 | | 34.0 | | 56 | 90 | 12 | |
| Droppoint (°C) | | | 135 | | 145 | | 160 | 175 | 135 | |

EP 0 546 635 B1

Example 6

In the same way as described in Example 1 a composition was prepared as listed hereinafter:

TABLE III

|  | phr |
|---|---|
| KRATON D-1122X | 80 |
| CARIFLEX TR-1184 | 20 |
| Hercures A-150 | 150 |
| Napvis 10 | 35 |
| Durcal 5 | 50 |
| Irganox 1010 | 2 |
| Viscosity, Pas | |
| 170 °C | 1285 |
| 180 °C | 686 |
| Temperature resistance 130 °C | + |
| Droppoint (°C) | 219 |

The composition showed an excellent chipping resistance according to the hereinbefore described parameters.

**Claims**

**Claims for the following Contracting States : DE, FR, GB, IT, NL, SE**

1. An underbody car coating composition, comprising at least:
   (a) 100 parts by weight of linear or star-shaped block copolymer, containing at least one block (A) derived from predominantly a monoalkenyl aromatic compound and having an apparent molecular weight in the range of from 5,000 to 125,000, and at least one block B optionally hydrogenated derived from predominantly conjugated diene, having an apparent molecular weight in the range of from 10,000 to 300,000 and containing vinyl groups in an amount of from 5 to 50 mole% relative to the conjugated diene molecules, the complete block copolymer containing bound monoalkenyl aromatic in an amount of from 30 to 70% by weight, the apparent molecular weight of the total block copolymer being in the range of from 25,000 to 350,000;
   (b) 100-200 parts by weight of the predominantly poly(monoalkenyl aromatic)block modifying resin;
   (c) 0-100 parts by weight of the predominantly poly(conjugated diene)block modifying resin;
   (d) 0-50 parts by weight of a plasticizer;
   (e) 0-200 parts by weight of a filler; and
   (f) 0-5 parts by weight of a stabilizer and/or fire retarder.

2. An underbody car coating composition according to claim 1, comprising:
   (a) 100 parts by weight of linear or star-shaped block copolymer, containing at least one block (A) derived from predominantly a monoalkenyl aromatic compound and having an apparent molecular weight in the range of from 6,000 to 60,000, and at least one block B optionally hydrogenated and derived from predominantly conjugated diene, having an apparent molecular weight in the range of from 20,000 to 150,000 and containing vinyl groups in an amount of from 5 to 50 mole% relative to the conjugated diene molecules, the complete block copolymer containing bound monoalkenyl aromatic in an amount of from 35 to 60% by weight;
   (b) 100-200 parts by weight of the predominantly poly(monoalkenyl aromatic)block modifying resin;
   (c) 0-100 parts by weight of the predominantly poly(conjugated diene)block modifying resin;
   (d) 0-50 parts by weight of a plasticizer;
   (e) 0-200 parts by weight of a filler; and
   (f) 0-5 parts by weight of a stabilizer and/or fire retarder.

3. An underbody car coating composition according to claim 1 or 2, characterized in that component (b) is present in an amount of from 120 to 180 parts by weight.

4. An underbody car coating composition according to claims 1-3, characterized in that as component (b) optionally substituted polystyrene resins and/or polyphenylene ethers are used.

5. An underbody car coating composition according to claim 4, characterized in that as component (b) substituted polystyrene and/or poly(2,6-dimethyl-1,4-phenylene ether) is used.

6. An underbody car coating composition according to claims 1 to 5, characterized in that component (c) is present in an amount of from 30 to 80 parts by weight.

7. An underbody car coating composition according to claims 1 to 6, characterized in that the plasticizers of component (d) are low molecular weight polyolefins, naphthenic oil, paraffinic oils or mixtures thereof.

8. An underbody car coating composition according to claim 7, characterized in that component (d) is a low molecular weight polyolefin.

9. An underbody car coating composition according to claim 8, characterized in that the low molecular weight polyolefin is a polyisobutene or polybutene.

10. An underbody car coating composition according to claims 8 and 9, characterized in that the low molecular weight polyolefin has a molecular weight in the range of from 500 to 6000.

11. Use of the underbody car coating composition by spraying or extrusion coating a composition according to claims 1-10 on a pretreated metal surface in a layer thickness of from 100 to 1000 $\mu$.

12. Formed layer of underbody car coating composition, obtained by the use according to claim 11.

**Claims for the following Contracting State : ES**

1. Process for manufacturing an underbody car coating composition, by mixing and melting together at least:

(a) 100 parts by weight of linear or star-shaped block copolymer, containing at least one block (A) derived from predominantly a monoalkenyl aromatic compound and having an apparent molecular weight in the range of from 5,000 to 125,000, and at least one block B optionally hydrogenated and derived from predominantly conjugated diene, having an apparent molecular weight in the range of from 10,000 to 300,00 and containing vinyl groups in an amount of from 5 to 50 mole% relative to the conjugated diene molecules, the complete block copolymer containing bound monoalkenyl aromatic in an amount of from 30 to 70% by weight, the apparent molecular weight of the total block copolymer being in the range of from 25,000 to 350,000;

(b) 100-200 parts by weight of the predominantly poly(monoalkenyl aromatic) block modifying resin;

(c) 0-100 parts by weight of the predominantly poly(conjungated diene) block modifying resin;

(d) 0-50 parts by weight of a plasticiser;

(e) 0-200 parts by weight of a filler; and

(f) 0-5 parts by weight of a stabiliser and/or fire retarder.

2. Process for manufacturing an underbody car coating composition according to claim 1, characterised in that are mixed and molten together:

(a) 100 parts by weight of linear or star-shaped block copolymer, containing at least one block (A) derived from predominantly a monoalkenyl aromatic compound and having an apparent molecular weight in the range of from 6,000 to 60,000, and at least one block B optionally hydrogenated and derived from predominantly conjugated diene, having an apparent molecular weight in the range of from 20,000 to 150,000 and containing vinyl groups in an amount of from 5 to 50 mole% relative to the conjugated diene molecules, the complete block copolymer containing bound monoalkenyl aromatic in an amount of from 35 to 60% by weight;

(b) 100-200 parts by weight of the predominantly poly(monoalkenyl aromatic) block modifying resin;

(c) 0-100 parts by weight of the predominantly poly(conjugated diene) block modifying resin;

(d) 0-50 parts by weight of a plasticiser;

(e) 0-200 parts by weight of a filler; and

(f) 0-5 parts by weight of a stabilizer and/or fire retarder.

3. Process according to claim 1 or 2, characterized in that component (b) is present in an amount of from 120 to 180 parts by weight.

4. Process according to claims 1-3, characterised in that as component (b) optionally substituted polystyrene resins and/or polyphenylene ethers are used.

5. Process according to claim 4, characterised in that as component (b) substituted polystyrene and/or poly(2,6-dimethyl-1,4-phenylene ether) is used.

6. Process according to claims 1 to 5, characterised in that component (c) is present in an amount of from 30 to 80 parts by weight.

7. Process according to claims 1 to 6, characterised in that the plasticisers of component (d) are low molecular weight polyolefins, naphthenic oil, paraffinic oils or mixtures thereof.

8. Process according to claim 7, characterised in that component (d) is a low molecular weight polyolefin.

9. Process according to claim 8, characterised in that the low molecular weight polyolefin is a polyisobutene or polybutene.

10. Process according to claims 8 and 9, characterised in that the low molecular weight polyolefin has a molecular weight in the range of from 500 to 6000.

11. Process for use of the underbody car coating composition obtained according to the processes of claims 1-10, by spraying or extrusion coating said composition on a pretreated metal surface in a layer thickness of from 100 to 100$\mu$.

12. Formed layer of underbody car coating composition, obtained by the use according to claim 11.

**Patentansprüche**
**Patentansprüche für folgende Vertragsstaaten : DE, FR, GB, IT, NL, SE**

1. Autounterboden-Beschichtungszusammensetzung, zumindest bestehend aus:
   (a) 100 Gewichtsteilen an linearem oder sternförmigem Blockcopolymerisat, enthaltend zumindest einen Block (A), der sich vorwiegend von einem Monoalkenylaromaten ableitet und ein scheinbares Molekulargewicht im Bereich von 5000 bis 125 000 aufweist, und zumindest einen, gegebenenfalls hydrierten, Block B, der sich von vorwiegend konjugiertem Dien ableitet, mit einem scheinbaren Molekulargewicht im Bereich von 10 000 bis 300 000, und Vinylgruppen in einer Menge von 5 bis 50 Mol-%, bezogen auf die konjugierten Dienmoleküle enthält, wobei das gesamte Blockcopolymerisat gebundenen Monoalkenylaromaten in einer Menge von 30 bis 70 Gew.-% enthält und das scheinbare Molekulargewicht des gesamten Blockcopolymerisats im Bereich von 25 000 bis 350 000 liegt;
   (b) 100-200 Gewichtsteilen des den vorwiegend aus Polymonoalkenylaromaten bestehenden Block modifizierenden Harzes;
   (c) 0-100 Gewichtsteilen des den vorwiegend aus polymerem konjugiertem Dien bestehenden Block modifizierenden Harzes;
   (d) 0-50 Gewichtsteilen eines Weichmachers;
   (e) 0-200 Gewichtsteilen eines Füllstoffs; und
   (f) 0-5 Gewichtsteilen eines Stabilisators und/oder feuerhemmenden Mittels.

2. Autounterboden-Beschichtungszusammensetzung nach Anspruch 1 bestehend aus:
   (a) 100 Gewichtsteilen an linearem oder sternförmigem Blockcopolymerisat, enthaltend zumindest einen Block (A), der sich vorwiegend von einem Monoalkenylaromaten ableitet und ein scheinbares Molekulargewicht im Bereich von 6000 bis 60 000 aufweist, und zumindest einen, gegebenenfalls hydrierten, Block B, der sich von vorwiegend konjugiertem Dien ableitet, mit einem scheinbaren Molekulargewicht im Bereich von 20 000 bis 150 000, und Vinylgruppen in einer Menge von 5 bis 50 Mol-%, bezogen auf die konjugierten Dienmoleküle enthält, wobei das gesamte Blockcopolymerisat gebundenen Monoalkenylaromaten in einer Menge von 35 bis 60 Gew.-% enthält,

(b) 100-200 Gewichtsteilen des den vorwiegend aus Polymonoalkenylaromaten bestehenden Block modifizierenden Harzes;

(c) 0-100 Gewichtsteilen des den vorwiegend aus polymerem konjugiertem Dien bestehenden Block modifizierenden Harzes;

(d) 0-50 Gewichtsteilen eines Weichmachers;

(e) 0-200 Gewichtsteilen eines Füllstoffs; und

(f) 0-5 Gewichtsteilen eines Stabilisators und/oder feuerhemmenden Mittels.

3. Autounterboden-Beschichtungszusammensetzung nach Anspruch 1 oder 2, dadurch gekennzeichnet, daß Komponente (b) in einer Menge von 120 bis 180 Gewichtsteilen vorliegt.

4. Autounterboden-Beschichtungszusammensetzung nach Ansprüchen 1-3, dadurch gekennzeichnet, daß als Komponente (b) gegebenenfalls substituierte Polystyrolharze und/oder Polyphenylenether verwendet werden.

5. Autounderboden-Beschichtungszusammensetzung nach Anspruch 4, dadurch gekennzeichnet, daß als Komponente (b) substituiertes Polystyrol und/oder Poly(2,6-dimethyl-1,4-phenylenether) verwendet wird.

6. Autounderboden-Beschichtungszusammensetzung nach Ansprüchen 1 bis 5, dadurch gekennzeichnet, daß Komponente (c) in einer Menge von 30 bis 80 Gewichtsteilen vorliegt.

7. Autounderboden-Beschichtungszusammensetzung nach Ansprüchen 1 bis 6, dadurch gekennzeichnet, daß es sich bei den Weichmachern der Komponente (d) um niedermolekulare Polyolefine, naphthenbasisches Öl, paraffinbasische Öle oder deren Mischungen handelt.

8. Autounderboden-Beschichtungszusammensetzung nach Anspruch 7, dadurch gekennzeichnet, daß es sich bei der Komponente (d) um ein niedermolekulares Polyolefin handelt.

9. Autounderboden-Beschichtungszusammensetzung nach Anspruch 8, dadurch gekennzeichnet, daß es sich bei dem niedermolekularen Polyolefin um ein Polyisobuten oder Polybuten handelt.

10. Autounderboden-Beschichtungszusammensetzung nach Ansprüchen 8 und 9, dadurch gekennzeichnet, daß das niedermolekulare Polyolefin ein Molekulargewicht im Bereich von 500 bis 6000 aufweist.

11. Verwendung der Autounterboden-Beschichtungszusammensetzung zur Sprühbeschichtung oder Extrusionsbeschichtung einer vorbehandelten Metalloberfläche mit einer Zusammensetzung nach Ansprüchen 1-10 in einer Schichtdicke von 100 bis 1000 $\mu$.

12. Ausgebildete Schicht aus Autounterboden-Beschichtungszusammensetzung, erhalten durch Verwendung nach Anspruch 11.

**Patentansprüche für folgenden Vertragsstaat : ES**

1. Verfahren zur Herstellung einer Autounterboden-Beschichtungszusammensetzung durch Vermischen und Verschmelzen von zumindest:

(a) 100 Gewichtsteilen an linearem oder sternförmigem Blockcopolymerisat, enthaltend zumindest einen Block (A), der sich vorwiegend von einem Monoalkenylaromaten ableitet und ein scheinbares Molekulargewicht im Bereich von 5000 bis 125 000 aufweist, und zumindest einen, gegebenenfalls hydrierten, Block B, der sich von vorwiegend konjugiertem Dien ableitet, mit einem scheinbaren Molekulargewicht im Bereich von 10 000 bis 300 000, und Vinylgruppen in einer Menge von 5 bis 50 Mol-%, bezogen auf die konjugierten Dienmoleküle enthält, wobei das gesamte Blockcopolymerisat gebundenen Monoalkenylaromaten in einer Menge von 30 bis 70 Gew.-% enthält und das scheinbare Molekulargewicht des gesamten Blockcopolymerisats im Bereich von 25 000 bis 350 000 liegt;

(b) 100-200 Gewichtsteilen des den vorwiegend aus Polymonoalkenylaromaten bestehenden Block modifizierenden Harzes;

(c) 0-100 Gewichtsteilen des den vorwiegend aus polymerem konjugiertem Dien bestehenden Block modifizierenden Harzes;

(d) 0-50 Gewichtsteilen eines Weichmachers;

(e) 0-200 Gewichtsteilen eines Füllstoffs; und

(f) 0-5 Gewichtsteilen eines Stabilisators und/oder feuerhemmenden Mittels.

2. Verfahren zur Herstellung einer Autounterboden-Beschichtungszusammensetzung nach Anspruch 1, dadurch gekennzeichnet, daß:

(a) 100 Gewichtsteile an linearem oder sternförmigem Blockcopolymerisat, enthaltend zumindest einen Block (A), der sich vorwiegend von einem Monoalkenylaromaten ableitet und ein scheinbares Molekulargewicht im Bereich von 6000 bis 60 000 aufweist, und zumindest einen, gegebenenfalls hydrierten, Block B, der sich von vorwiegend konjugiertem Dien ableitet, mit einem scheinbaren Molekulargewicht im Bereich von 20 000 bis 150 000, und Vinylgruppen in einer Menge von 5 bis 50 Mol-%, bezogen auf die konjugierten Dienmoleküle enthält, wobei das gesamte Blockcopolymerisat gebundenen Monoalkenylaromaten in einer Menge von 35 bis 60 Gew.-% enthält,

(b) 100-200 Gewichtsteile des den vorwiegend aus Polymonoalkenylaromaten bestehenden Block modifizierenden Harzes;

(c) 0-100 Gewichtsteile des den vorwiegend aus polymerem konjugiertem Dien bestehenden Block modifizierenden Harzes;

(d) 0-50 Gewichtsteile eines Weichmachers;

(e) 0-200 Gewichtsteile eines Füllstoffs; und

(f) 0-5 Gewichtsteile eines Stabilisators und/oder feuerhemmenden Mittels miteinander vermischt und verschmolzen werden.

3. Verfahren nach Anspruch 1 oder 2, dadurch gekennzeichnet, daß Komponente (b) in einer Menge von 120 bis 180 Gewichtsteilen vorliegt.

4. Verfahren nach Ansprüchen 1-3, dadurch gekennzeichnet, daß als Komponente (b) gegebenenfalls substituierte Polystyrolharze und/oder Polyphenylenether verwendet werden.

5. Verfahren nach Anspruch 4, dadurch gekennzeichnet, daß als Komponente (b) substituiertes Polystyrol und/oder Poly(2,6-dimethyl-1,4-phenylenether) verwendet wird.

6. Verfahren nach Ansprüchen 1 bis 5, dadurch gekennzeichnet, daß Komponente (c) in einer Menge von 30 bis 80 Gewichtsteilen vorliegt.

7. Verfahren nach Ansprüchen 1 bis 6, dadurch gekennzeichnet, daß es sich bei den Weichmachern der Komponente (d) um niedermolekulare Polyolefine, naphthenbasisches Öl, paraffinbasische Öle oder deren Mischungen handelt.

8. Verfahren nach Anspruch 7, dadurch gekennzeichnet, daß es sich bei der Komponente (d) um ein niedermolekulares Polyolefin handelt.

9. Verfahren nach Anspruch 8, dadurch gekennzeichnet, daß es sich bei dem niedermolekularen Polyolefin um ein Polyisobuten oder Polybuten handelt.

10. Verfahren nach Ansprüchen 8 und 9, dadurch gekennzeichnet, daß das niedermolekulare Polyolefin ein Molekulargewicht im Bereich von 500 bis 6000 aufweist.

11. Verfahren zur Verwendung der nach dem Verfahren der Ansprüche 1-10 erhaltenen Autounterboden-Beschichtungszusammensetzung zur Sprühbeschichtung oder Extrusionsbeschichtung einer vorbehandelten Metalloberfläche mit der Zusammensetzung in einer Schichtdicke von 100 bis 1000 $\mu$.

12. Ausgebildete Schicht aus Autounterboden-Beschichtungszussmmensetzung, erhalten durch Verwendung nach Anspruch 11.

**Revendications**
**Revendications pour les Etats contractants suivants : DE, FR, GB, IT, NL, SE**

1.  Une composition de revêtement pour dessous de caisse de voiture, comprenant au moins :
    (a) 100 parties en poids de copolymère séquencé linéaire ou en étoile contenant au moins un bloc (A) dérivé de principalement un composé monoalcényl aromatique, ayant un poids moléculaire apparent compris entre 5 000 et 125 000, et au moins un bloc B éventuellement hydrogéné et dérivé de principalement un diène conjugué, ayant un poids moléculaire apparent compris entre 10 000 et 300 000 et contenant des groupes vinyle dans une quantité comprise entre 5 et 50 modes % par rapport aux molécules de diène conjugué, le copolymère séquencé complet contenant le composé monoalcényl aromatique lié dans une quantité comprise entre 30 et 70 % en poids, le poids moléculaire apparent du copolymère séquencé total étant compris entre 25 000 et 350 000 ;
    (b) 100-200 parties en poids de résine de modification du bloc de polymère de principalement un composé monoalcényl aromatique ;
    (c) 0-100 parties en poids de résine de modification du bloc de polymère de principalement un diène conjugué ;
    (d) 0-50 parties en poids d'un plastifiant ;
    (e) 0-200 parties en poids d'une charge ; et
    (f) 0-5 parties en poids d'un stabilisant et/ou d'un retardateur d'inflammation.

2.  Une composition de revêtement pour dessous de caisse de voiture selon la revendication I, comprenant :
    (a) 100 parties en poids de copolymère séquencé linéaire ou en étoile contenant au moins un bloc (A) dérivé de principalement un composé monoalcényl aromatique, ayant un poids moléculaire apparent compris entre 6 000 et 60 000, et au moins un bloc B éventuellement hydrogéné et dérivé de principalement un diène conjugué, ayant un poids moléculaire apparent compris entre 20 000 et 150 000 et contenant des groupes vinyle dans une quantité comprise entre 5 et 50 moles % par rapport aux molécules de diène conjugué, le copolymère séquencé complet contenant le composé monoalcényl aromatique lié dans une quantité comprise entre 35 et 60 % en poids ;
    (b) 100-200 parties en poids de résine de modification du bloc de polymère de principalement un composé monoalcényl aromatique ;
    (c) 0-100 parties en poids de résine de modification du bloc de polymère de principalement un diène conjugué ;
    (d) 0-50 parties en poids d'un plastifiant ;
    (e) 0-200 parties en poids d'une charge ; et
    (f) 0-5 parties en poids d'un stabilisant et/ou d'un retardateur d'inflammation.

3.  Une composition de revêtement pour dessous de caisse de voiture selon la revendication I ou 2, caractérisé en ce que le constituant (b) est présent dans une quantité de 120 à 180 parties en poids.

4.  Une composition de revêtement pour dessous de caisse de voiture selon les revendications I-3, caractérisé en ce que comme constituant (b) on utilise des résines de polystyrène éventuellement substitué et/ou des poly(phénylène éthers).

5.  Une composition de revêtement pour dessous de caisse de voiture selon la revendication 4, caractérisée en ce que comme constituant (b) on utilise du polystyrène substitué et/ou du poly(2,6-diméthyl-I,4-phénylène éther).

6.  Une composition de revêtement pour dessous de caisse de voiture selon les revendications I à 5, caractérisé en ce que le constituant (c) est présent dans une quantité de 30 à 80 parties en poids.

7.  Une composition de revêtement pour dessous de caisse de voiture selon les revendications I à 6, caractérisée en ce que les plastifiants du constituant (d) sont des polyoléfines de bas poids moléculaire, une huile naphténique, des huiles paraffiniques ou leurs mélanges.

8.  Une composition de revêtement pour dessous de caisse de voiture selon la revendication 7, caractérisée en ce que le constituant (d) est une polyoléfine de bas poids moléculaire.

9. Une composition de revêtement pour dessous de caisse de voiture selon la revendication 8, caractérisée en ce que la polyoléfine de bas poids moléculaire est un polyisobutène ou polybutène.

10. Une composition de revêtement pour dessous de caisse de voiture selon les revendications 8 et 9, caractérisée en ce que la polyoléfine de bas poids moléculaire a un poids moléculaire compris entre 50 et 6000.

11. Utilisation de la composition de revêtement pour dessous de caisse de voiture en appliquant par pulvérisation ou par extrusion une composition selon les revendications I-l0 sur une surface métallique prétraitée à une épaisseur de couche comprise entre 100 et 1000 micromètres.

12. Couche formée d'une composition de revêtement pour dessous de caisse de voiture, obtenue par l'utilisation selon la revendication II.

**Revendications pour l'Etats contractant suivant : ES**

1. Procédé de préparation d'une composition de revêtement pour dessous de caisse de voiture, en mélangeant et en faisant fondre ensemble au moins :
   (a) 100 parties en poids de copolymère séquencé linéaire ou en étoile contenant au moins un bloc (A) dérivé de principalement un composé monoalcényl aromatique, ayant un poids moléculaire apparent compris entre 5 000 et 125 000, et au moins un bloc B éventuellement hydrogéné et dérivé de principalement un diène conjugué, ayant un poids moléculaire apparent compris entre 10 000 et 300 000 et contenant des groupes vinyle dans une quantité comprise entre 5 et 50 moles % par rapport aux molécules de diène conjugué, le copolymère séquencé complet contenant le composé monoalcényl aromatique lié dans une quantité comprise entre 30 et 70 % en poids, le poids moléculaire apparent du copolymère séquencé total étant compris entre 25 000 et 350 000 ;
   (b) 100-200 parties en poids de résine de modification du bloc de polymère de principalement un composé monoalcényl aromatique ;
   (c) 0-100 parties en poids de résine de modification du bloc de polymère de principalement un diène conjugué ;
   (d) 0-50 parties en poids d'un plastifiant ;
   (e) 0-200 parties en poids d'une charge ; et
   (f) 0-5 parties en poids d'un stabilisant et/ou d'un retardateur d'inflammation.

2. Procédé de préparation d'une composition de revêtement pour dessous de caisse de voiture selon la revendication I, caractérisé en ce qu'on mélange et qu'on fait fondre ensemble :
   (a) 100 parties en poids de copolymère séquencé linéaire ou en étoile contenant au moins un bloc (A) dérivé de principalement un composé monoalcényl aromatique, ayant un poids moléculaire apparent compris entre 6 000 et 60 000, et au moins un bloc a éventuellement hydrogéné et dérivé de principalement un diène conjugué, ayant un poids moléculaire apparent compris entre 20 000 et 150 000 et contenant des groupes vinyle dans une quantité comprise entre 5 et 50 moles % par rapport aux molécules de diène conjugué, le copolymère séquencé complet contenant le composé monoalcényl aromatique lié dans une quantité comprise entre 35 et 60 % en poids ;
   (b) 100-200 parties en poids de résine de modification du bloc de polymère de principalement un composé monoalcényl aromatique ;
   (c) 0-100 parties en poids de résine de modification du bloc de polymère de principalement un diène conjugué ;
   (d) 0-50 parties en poids d'un plastifiant ;
   (e) 0-200 parties en poids d'une charge ; et
   (f) 0-5 parties en poids d'un stabilisant et/ou d'un retardateur d'inflammation.

3. Procédé selon la revendication I ou 2, caractérisé en ce que le constituant (b) est présent dans une quantité de 120 à 180 parties en poids.

4. Procédé selon les revendications I-3, caractérisé en ce que comme constituant (b) on utilise des résines de polystyrène éventuellement substitué et/ou des poly(phénylène éthers).

**5.** Procédé selon la revendication 4, caractérisé en ce que comme constituant (b) on utilise du polystyrène substitué et/ou du poly(2,6-diméthyl-l,4-phénylène éther).

**6.** Procédé selon les revendications I à 5, caractérisé en ce que le constituant (c) est présent dans une quantité de 30 à 80 parties en poids.

**7.** Procédé selon les revendications I à 6, caractérisé en ce que les plastifiants du constituant (d) sont des polyoléfines de bas poids moléculaire, une huile naphténique, des huiles paraffiniques ou leurs mélanges.

**8.** Procédé selon la revendication 7, caractérisé en ce que le constituant (d) est une polyoléfine de bas poids moléculaire.

**9.** Procédé selon la revendication 8, caractérisé en ce que la polyoléfine de bas poids moléculaire est un polyisobutène ou polybutène.

**10.** Procédé selon les revendications 8 et 9, caractérisé en ce que la polyoléfine de bas poids moléculaire a un poids moléculaire compris entre 500 et 6000.

**11.** Procédé pour l'utilisation de la composition de revêtement pour dessous de caisse de voiture obtenue selon les procédés des revendications I-I0, en appliquant cette composition par pulvérisation ou par extrusion sur une surface métallique prétraitée à une épaisseur de couche comprise entre 100 et 1000 micromètres.

**12.** Couche formée d'une composition de revêtement pour dessous de caisse de voiture, obtenue par l'utilisation selon la revendication II.